# FASCICULE DE BREVET EUROPEEN

(11) **EP 1 169 276 B1**
(45) Date de publication et mention de la délivrance du brevet: **13.11.2002**
(21) Numéro de dépôt: 00918972.1
(22) Date de dépôt: 13.04.2000
(51) Int. Cl.: C03C 25/10, C08K 9/04, C08K 9/06, C08J 5/08

(54) **CHARGE DE TYPE VITREUX POUR MATIERES PLASTIQUES ET RESINES ET PROCEDE D'OBTENTION DE CELLE-CI**
FÜLLSTOFF AUF BASIS VON GLAS FÜR KUNSTSTOFFE UND HARZE UND VERFAHREN ZU SEINER HERSTELLUNG
VITREOUS FILLER FOR PLASTIC MATERIALS AND RESINS AND METHOD FOR OBTAINING SAME

(30) Priorité: 14.04.1999 IT MI990768
(43) Date de publication de la demande: 09.01.2002
(73) Titulaire: Saint-Gobain Vetrotex France S.A., 73000 Chambéry (FR)
(72) Inventeur: ROSSI, Francesco, I-17028 Spotorno (IT); FERRANTE, Antonio, I-20145 Milan (IT)
(74) Mandataire: Cardin, Elise
(86) Numéro de dépôt international: FR0000961
(87) Numéro de publication internationale: WO00061513

(56) Documents cités:
- WO-A-92/01024
- DD-A- 87 012
- DATABASE WPI Section Ch, Week 199307 Derwent Publications Ltd., London, GB; Class A85, AN 1993-055211 XP002143381 & JP 05 004994 A (CHISSO CORP), 14 janvier 1993 (1993-01-14)

## Description

L'invention a pour objet une charge de type vitreux pour matières plastiques et résines, et un procédé d'obtention de celle-ci.

Comme on le sait, les "charges" ont une grande importance dans la composition globale d'articles et produits à base de résines notamment phénoliques et de matières plastiques, spécialement quand ces articles et produits sont réalisés par opération de moulage.

Les charges sont un matériau additif qui est normalement inséré dans les polymères, et qui peut accomplir, selon les situations, la fonction de simple remplissage ou celle de renforcement important.

En pourcentage pondéral, la quantité de charges peut même être très élevée, par exemple 40%, et celles-ci peuvent influer de façon déterminante sur les caractéristiques physico-chimiques des articles réalisés.

Parmi les différentes charges existantes, celles de type vitreux sont très importantes et très répandues, et un type bien connu de charges vitreuses consiste en de menus éléments en verre sensiblement sphériques, dénommés par la suite microbilles ou granules, dont le diamètre maximum est très réduit, de l'ordre, par exemple, du dixième ou du centième de millimètre.

Les polymères ou "matrices" qui enveloppent ces microbilles ou granules de verre conduisent à des articles dont la résistance à l'abrasion, au choc, à la compression, à la flexion, est améliorée, et qui présentent une imperméabilité et une tenue aux acides et aux solvants accrue.

D'autres avantages résultant de l'emploi desdites microbilles ou granules de verre comme charges sont l'amélioration générale des propriétés électriques et thermiques.

Les opérations de moulage sont nettement améliorées du fait de la diminution du retrait dans le moule, et on obtient une surface de moulage plus lisse et mieux finie.

Il en résulte aussi une réduction des coûts, en proportion du coût et de la quantité de microbilles ajoutées.

Malheureusement, ces microbilles de verre ne peuvent pas être simplement ajoutées aux dits matériaux ou matrices en matière plastique ou résines phénoliques.

Elles demandent en effet à être préalablement traitées en surface avec des substances, dénommées "ensimages", qui ont la fonction de liant entre le verre et les matrices, pour garantir une adhésion au verre parfaite et durable. Parmi les ensimages reconnus comme les plus efficaces se trouvent ceux communément appelés "silanes". Ces ensimages particuliers sont constitués de molécules ayant une partie dotée d'une affinité pour le verre des microbilles et une autre partie capable de copolymériser avec les matrices.

En pratique, lesdits microbilles ou granules sont fondamentalement réalisés en verre revêtu d'un ensimage du type approprié

La technique connue citée ci-dessus présente évidemment des avantages et des inconvénients. Les avantages sont liés, comme déjà précisé, aux améliorations qualitatives des produits finis qui contiennent lesdites microbilles. Les inconvénients tiennent à une certaine difficulté de production et aux coûts desdites microbilles.

En effet, celles-ci doivent avoir des dimensions bien définies. En particulier, les particules de verre qui les constituent doivent être de petites dimensions, comprises ente un dixième et un centième de millimètre. Pour produire de telles particules, il faut disposer d'installations et équipements très coûteux.

En outre, l'application postérieure des ensimages introduit une phase supplémentaire s'ajoutant à la phase de production de la partie en verre, avec une sensible augmentation des coûts.

Les coûts élevés de production et d'application des ensimages ont pour conséquence une augmentation des coûts des produits finis et réduisent considérablement l'emploi des charges décrites.

En effet, il ne faut pas oublier que les charges entrant dans les matières plastiques sont souvent considérées comme un remplissage qui permet de réduire de façon simple et efficace les coûts globaux des matières employées dans les opérations de moulage.

Un autre inconvénient provient du fait que, malgré l'emploi des ensimages, l'accrochage aux matrices des microbilles ou granules n'est pas toujours optimal. De ce point de vue, il est certainement souhaitable d'obtenir une meilleure adhésion entre le verre et le polymère.

L'objectif technique de l'invention est donc de réduire substantiellement les inconvénients cités, en particulier ceux liés au coût et au procédé de fabrication desdits microbilles ou granules, et à la capacité d'accrochage de ces derniers aux matrices qui les enveloppent.

Cet objectif est atteint grâce à une charge de type vitreux pour matières plastiques et résines notamment phénoliques, du type incluant des granules de matériau vitreux pourvus d'un ensimage, caractérisée en ce que chacun desdits granules comprend une multiplicité de fragments de matériau vitreux agglomérés entre eux par ledit ensimage.

Suivant des caractéristiques avantageuses :
- ledit ensimage renferme un composé choisi parmi les esters d'acides alkylsiliciques.
- ledit ensimage est un aminosilane, en particulier de formule NH₂-R'-Si(OR)₃, dans laquelle :
   - R' désigne une chaîne hydrocarbonée linéaire ou ramifiée, saturée ou insaturée, éventuellement substituée comportant avantageusement de 1 à 20 atomes de carbone, notamment de 2 à 8 atomes de carbone, de préférence une chaîne alkylène,
   - R désigne un groupe alkyle, de préférence de 1 à 5 atomes de carbone.

Un silane particulièrement préféré est l'aminopropyltriéthoxysilane NH₂(CH₂)₃Si(OC₂H₅)₃.
- lesdits granules ont une taille moyenne maximale comprise entre vingt et soixante micromètres et comportent au moins deux desdits fragments.
- lesdits fragments ont en moyenne une dimension linéaire maximale comprise entre cinq et quinze micromètres.
- lesdits fragments sont en verre, notamment de type "E".
- lesdits fragments sont en verre broyé.
- lesdits fragments sont des portions de fils de verre.
- la quantité dudit ensimage est sensiblement comprise entre cinq et cinquante pour mille, notamment entre cinq et vingt-cinq pour mille du poids de matériau vitreux sec.
- l'ensimage renferme en outre un liant minéral, tel qu'une argile ou mélange d'argiles.

L'invention a également pour objet un procédé d'obtention de cette charge, caractérisé en ce qu'il comprend : une phase de broyage dans laquelle le matériau vitreux est réduit en fragments ; une phase de dosage dans laquelle on forme un mélange incluant lesdits fragments et un ensimage ; et une phase d'agglomération dans laquelle ledit mélange de fragments et d'ensimage est séché de façon à former des granules compacts incluant chacun une multiplicité desdits fragments et des portions dudit ensimage séché.

Suivant des caractéristiques avantageuses :
- ladite phase de broyage est précédée d'une phase de sélection où l'on choisit, pour ladite phase de broyage, des fils de verre provenant de rebuts et déchets de production.
- ladite phase de broyage est prolongée jusqu'à obtenir des fragments ayant en moyenne une dimension linéaire maximale comprise entre cinq et quinze micromètres.
- au cours de ladite phase de broyage, le matériau vitreux est additionné d'eau et d'un fluidifiant et/ou d'un liant minéral, tel qu'une argile, par exemple la bentonite.
- au cours de ladite phase de dosage, lesdits fragments sont mélangés à un ensimage choisi parmi les esters d'acides alkylsiliciques, notamment un aminosilane.
- au cours de ladite phase de dosage, ledit ensimage est dosé à une quantité comprise entre cinq et cinquante pour mille du poids de matériau vitreux sec.
- au cours de ladite phase d'agglomération, ledit mélange de fragments et d'ensimage est porté à une température de séchage comprise entre cent vingt-cinq et cent quarante-cinq degrés Celsius.
- ladite phase d'agglomération est exécutée dans une enceinte chauffée, et dans lequel ledit mélange de fragments et d'ensimage est injecté dans ladite enceinte au moyen d'air comprimé, de façon à former des granules ayant en moyenne une taille maximale comprise entre vingt et soixante micromètres.

Nous allons maintenant décrire, à titre d'exemple non limitatif, un mode de réalisation préféré d'une charge de type vitreux, illustré par les dessins annexés, dans lesquels :
- la figure 1 met en évidence, de manière très schématique et très agrandie, la structure d'un granule constituant la charge selon l'invention ; et
- la figure 2 montre la séquence des phases principales du procédé de fabrication de granules de la figure 1.

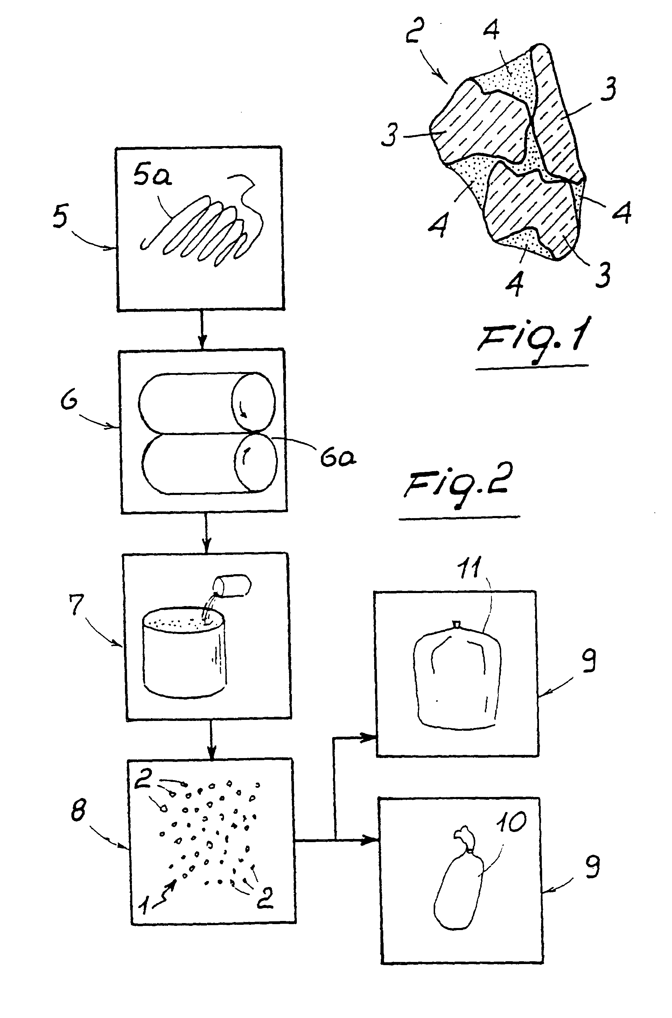

En référence à ces figures, la charge selon l'invention est globalement et schématiquement indiquée dans son ensemble par le repère 1, dans un cadre de la figure 2.

La charge 1 est en général du type formé de grains que l'on peut qualifier d'éléments sensiblement sphériques ou de microbilles ou de granules de diamètre très réduit, constitués ici de verre pourvu d'un ensimage. Ces granules sont destinés à être noyés dans les matières plastiques et résines phénoliques. pour en améliorer de multiples caractéristiques, comme déjà indiqué plus haut.

En particulier, comme visible sur la figure 1, la charge 1 est avantageusement constituée de granules 2 dont la structure est de type composite.

Chaque granule 2 est en effet essentiellement constitué d'une multiplicité de fragments de verre 3 agglomérés entre eux au moyen d'un ensimage 4 qui comprend un ensimage choisi de préférence parmi les silanes particuliers dont la grande efficacité a été démontrée expérimentalement : les alkoxysilanes, esters d'acides alkylsiliciques.

Parmi les esters d'acides alkylsiliciques, on préfère un aminosilane NH₂-R'-Si(OR)₃, dans lequel R' désigne un groupe alkyle et R un groupe organique, et plus particulièrement l'aminosilane de formule NH₂-(CH₂)-Si(OC₂H₅)₃.

Le silane contenu dans l'ensimage 4 qui unit entre eux les fragments 3 est présent en quantité comprise sensiblement entre cinq et vingt-cinq pour mille en poids du verre sec.

Les granules 2 présentent, en moyenne, une taille maximale comprise entre vingt et soixante micromètres, et contiennent au moins deux fragments 3. Par taille maximale des granules 2, qui ont une structure compacte grâce à la tendance de l'ensimage à former des gouttes, on entend le diamètre maximal pris dans le sens du plus grand développement des granules.

Les fragments 3 ont au contraire un profil particulièrement irrégulier et présentent en moyenne une dimension linéaire maximale comprise entre cinq et quinze micromètres, et de préférence égale à dix micromètres.

Un autre aspect de l'invention réside dans le fait que les fragments 3 sont en verre broyé. Par exemple, sans exclure les autres types de verre, Ils peuvent être des portions de fils de verre de type "E" obtenues par broyage.

Comme on le sait, le verre de type "E" est un verre ayant des qualités optimales de résistance et un haut module d'élasticité, ainsi qu'un point de fusion élevé. Il peut être défini comme un borosilicate de calcium et d'aluminium caractérisé par une très basse teneur en alcalins.

On peut utiliser des fils de verre de diamètres différents, en mélange, les diamètres n'étant de préférence pas inférieurs à 10 micromètres.

Globalement, à pur titre d'exemple donné comme composition préférée du verre broyé, on peut donner la composition suivante à la charge 1 :
- Aminosilane NH₂(CH₂)₃Si(OC₂H₅)₃ : 1,95% pondéral
- Silice SiO₂ : 71,5% pondéral
- Oxyde de sodium Na₂O : 13,43% pondéral
- Carbonate de calcium CaO : 9,6% pondéral
- Oxyde de magnésium MgO : 3,23% pondéral
- Alumine Al₂O₃ : 0,39% pondéral
- Oxydes de fer FeO / Fe₂O₃ : 0,2% pondéral
- Oxyde de potassium K₂O : 0,1% pondéral

Les granules 2 ainsi réalisés ont un coût minime, car ils sont constitués de simple verre broyé et ont une structure rugueuse propre à garantir l'accrochage maximum aux matrices en polymère, sans toutefois introduire d'irrégularités excessives. En effet, les fragments 3 sont englobés en partie d'ensimage 4 et associés à d'autres fragments de façon à définir globalement une forme compacte.

Une caractéristique avantageuse des granules 2 est que, une fois réalisés, ils ne nécessitent pas d'être traités par un ensimage : celui-ci est déjà présent dans le liant qui agglomère les fragments 3.

L'invention comprend aussi un nouveau procédé d'obtention d'une charge de type vitreux.

Le procédé se compose de plusieurs phases. En premier lieu, il y a une phase de sélection, désignée par le repère 5, dans laquelle on choisit le type de verre devant subir les opérations successives.

On choisit par exemple le verre de type "E" et de préférence des fils de verre provenant des rebuts et déchets de production, tels que ceux de la marque "Borosil", consistant en déchet de verre humide obtenu au cours de l'opération de fibrage de fils humides, indiquée schématiquement par le repère 5a.

Le verre choisi est ensuite soumis à une phase de broyage 6 dans laquelle celui-ci est réduit en fragments.

Le broyage est effectué par exemple dans des broyeurs par voie humide du type "Allubit", c'est à dire des broyeurs connus pour le broyage des céramiques et comprenant des cylindres tournants à revêtement en Allubit, alumine frittée, à l'intérieur desquels se trouve une charge broyante composée par des sphères en Allubit de différents diamètres.

Dans ces broyeurs, représentés simplement par deux cylindres repérés 6a, le fil de verre est introduit avec de l'eau et de la bentonite.

La bentonite est un mélange naturel bien connu constitué essentiellement de minéraux argileux qui a la propriété d'être fluidifiant à l'état humide et collant à l'état sec.

Dans les broyeurs, la masse broyée est composée de sensiblement un pour cent en poids de bentonite, le restant étant constitué de verre et d'eau en parties égales.

La bentonite et l'eau facilitent le broyage du verre. la bentonite aidant à maintenir le verre en suspension dans l'eau. Ce broyage est effectué par exemple pendant vingt heures si l'on broie dix tonnes de verre, jusqu'à obtenir des fragments de verre présentant en moyenne une dimension linéaire maximale comprise entre cinq et quinze micromètres.

De préférence, cette dimension est sensiblement égale à dix microns.

Après le broyage, on peut procéder à des phases auxiliaires telles que filtration, déferrisation, stockage en cuves.

Si le matériau broyé est recueilli en cuves spécialisées, il importe de le maintenir en agitation et de prendre en compte les pertes d'eau pour éviter que se forme une masse vitreuse relativement compacte et difficile à mettre en oeuvre.

On exécute ensuite une phase de dosage 7 dans laquelle on réalise un mélange incluant les fragments 3 éventuellement porteurs d'une partie de la bentonite et un composé d'ensimage choisi de préférence parmi les esters d'acides alkylsiliciques, en particulier un aminosilane. La quantité de cet agent d'ensimage (silane) est comprise entre cinq et vingt-cinq pour mille en poids du verre sec. L'ensemble formé par la bentonite présente avec les fragments et le silane constitue l'ensimage des fragments au sens de la présente invention.

Si le verre est recueilli en cuve, le dosage est fait de préférence en prélevant de la cuve les quantités déterminées, par exemple un mètre cube, et en ajoutant simplement lesdites quantités d'additifs.

Le mélange est traité avec beaucoup de soin pour éviter la séparation des composants, en particulier en le maintenant en agitation rapide, par exemple par des pales tournantes à quatre-vingts - cent soixante tours par minute.

On réalise ensuite une phase d'agglomération 8 dans laquelle ledit mélange de fragments et d'ensimage est séché, de préférence par atomisation, de façon à former des granules 2 compacts incluant chacun une multiplicité de fragments et de portions séchées de l'ensimage.

Pour réaliser cette phase 8, le mélange de fragments et d'ensimage est soumis à une température de séchage comprise entre cent vingt-cinq et cent quarante cinq degrés Celsius, de préférence à cent quarante degrés Celsius.

Cette température est obtenue dans une enceinte chauffée dans laquelle le mélange est injecté par de l'air comprimé, de façon à former des granules 2 ayant en moyenne une taille maximale comprise entre vingt et soixante micromètres, comme déjà précisé.

En détail, il est par exemple prévu que le mélange est aspiré puis injecté par des pulvérisateurs à air comprimé dans un séchoir muni de brûleurs à méthane.

La température préférée de cent quarante degrés élimine l'eau résiduelle provoque avant tout la réaction du silane de l'ensimage qui, en se solidifiant, produit l'agglomération des fragments 3 en granules 2, et solidifie aussi les résidus de bentonite qui participe à l'agglomération.

La charge 1 ainsi réalisée, indiquée dans le cadre représentant la phase d'agglomération 8, peut être convoyée vers une phase de conditionnement 9.

On peut envisager en particulier un conditionnement en sacs 10 ou un conditionnement en grands sacs 11 de mille kilogrammes.

Le procédé permet ainsi de réaliser la charge 1 en différentes phases non particulièrement complexes, et qui ne requièrent pas d'installations complexes et très coûteuses.

L'invention comporte des avantages importants.

En effet, la structure originale des granules, formés de fragments de verre broyés agglomérés par le même ensimage que celui utilisé pour favoriser la liaison entre le verre et la matière plastique ou la résine phénolique, élimine la phase d'application finale de l'ensimage sur les microbilles.

Les granules offrent en outre un coût réduit, tant du fait des matières premières utilisées, en majorité de simples fragments de verre, que du fait du procédé de fabrication qui ne comporte pas de phases de préparation exigeant de grosses installations.

Les granules réalisés sont compacts mais rugueux et permettent ainsi un accrochage optimal à la matière plastique, sans conférer à cette dernière une rugosité excessive.

L'invention décrite ci-dessus dans un mode de réalisation préféré est susceptible de nombreuses modifications et variantes, rentrant toutes dans le champ du concept inventif. En particulier, l'invention prévoit que du silane seul soit employé pour constituer l'ensimage qui agglomère les fragments 3, le broyage pouvant éventuellement être assisté par un fluidifiant qui n'a pas de propriété collante à l'état sec.

En outre, d'autres détails peuvent être remplacés par des éléments équivalents.

## Revendications

1. Charge (1) de type vitreux pour matières plastiques et résines, du type incluant des granules (2) de matériau vitreux pourvus d'un ensimage, **caractérisée en ce que** chacun desdits granules comprend une multiplicité de fragments (3) de matériau vitreux agglomérés entre eux par ledit ensimage (4).

2. Charge de type vitreux selon la revendication 1, dans laquelle ledit ensimage comprend un composé choisi parmi les esters d'acides alkylsiliciques.

3. Charge de type vitreux selon l'une ou plusieurs des revendications précédentes, dans laquelle ledit ensimage est un aminosilane, en particulier de formule NH₂(CH₂)₃Si(OC₂H₅)₃.

4. Charge de type vitreux selon l'une ou plusieurs des revendications précédentes, dans laquelle lesdits granules (2) ont une taille moyenne maximale comprise entre vingt et soixante micromètres et comportent au moins deux desdits fragments (3).

5. Charge de type vitreux selon l'une ou plusieurs des revendications précédentes, dans laquelle lesdits fragments (3) ont en moyenne une dimension linéaire maximale comprise entre cinq et quinze micromètres.

6. Charge de type vitreux selon l'une ou plusieurs des revendications précédentes, en particulier la revendication 1, dans laquelle lesdits fragments (3) sont en verre notamment de type "E".

7. Charge de type vitreux selon l'une ou plusieurs des revendications précédentes, dans laquelle lesdits fragments (3) sont en verre broyé.

8. Charge de type vitreux selon l'une ou plusieurs des revendications précédentes, dans laquelle lesdits fragments (3) sont des portions de fils (5a) de verre.

9. Charge de type vitreux selon l'une ou plusieurs des revendications précédentes, dans laquelle la quantité dudit ensimage est sensiblement comprise entre cinq et cinquante pour mille du poids de matériau vitreux sec.

10. Procédé de fabrication d'une charge de type vitreux pour matières plastiques et résines, **caractérisé en ce qu'**il comprend : une phase de broyage dans laquelle le matériau vitreux est réduit en fragments ; une phase de dosage dans laquelle on forme un mélange incluant lesdits fragments et un ensimage ; et une phase d'agglomération dans laquelle ledit mélange de fragments et d'ensimage est séché de façon à former des granules compacts incluant chacun une multiplicité desdits fragments et des portions dudit ensimage séché.

11. Procédé selon la revendication 10, dans lequel ladite phase de broyage est précédée d'une phase de sélection où l'on choisit, pour ladite phase de broyage, des fils de verre provenant de rebuts et déchets de production.

12. Procédé selon une ou plusieurs des revendications 10 ou 11, dans lequel ladite phase de broyage est prolongée jusqu'à obtenir des fragments ayant en moyenne une dimension linéaire maximale comprise entre cinq et quinze micromètres.

13. Procédé selon une ou plusieurs des revendications 10 à 12, dans lequel, au cours de ladite phase de broyage, le matériau vitreux est additionné d'eau et d'un fluidifiant et/ou d'un liant minéral tel que la bentonite.

14. Procédé selon une ou plusieurs des revendications 10 à 13, dans lequel, au cours de ladite phase de dosage, lesdits fragments sont mélangés à un ensimage choisi parmi les esters d'acides alkylsiliciques, notamment un aminosilane.

15. Procédé selon une ou plusieurs des revendications 10 à 14, dans lequel, au cours de ladite phase de dosage, ledit ensimage est dosé à une quantité comprise entre cinq et cinquante pour mille du poids de matériau vitreux sec.

16. Procédé selon une ou plusieurs des revendications 10 à 15, dans lequel, au cours de ladite phase d'agglomération, ledit mélange de fragments et d'ensimage est porté à une température de séchage comprise entre cent vingt-cinq et cent quarante-cinq degrés Celsius.

17. Procédé selon une ou plusieurs des revendications 10 à 16, dans lequel ladite phase d'agglomération est exécutée dans une enceinte chauffée, et dans lequel ledit mélange de fragments et d'ensimage est injecté dans ladite enceinte au moyen d'air comprimé, de façon à former des granules ayant en moyenne une taille maximale comprise entre vingt et soixante micromètres.

## Patentansprüche

1. Glasartiger Füllstoff (1) für Kunststoff und Harz eines Typs, der mit einer Schlichte versehene Körnchen (2) aus glasartigem Material umfasst, **dadurch gekennzeichnet, dass** die Körnchen jeweils eine Vielzahl von Fragmenten (3) aus glasartigem Material umfassen, die untereinander durch die Schlichte (4) agglomeriert sind.

2. Glasartiger Füllstoff nach Anspruch 1, bei welchem die Schlichte eine Verbindung umfasst, die aus Alkylkieselsäureestern ausgewählt ist.

3. Glasartiger Füllstoff nach einem oder mehreren der vorhergehenden Ansprüche, bei welchem die Schlichte ein Aminosilan, insbesondere mit der Formel NH₂(CH₂)₃Si(OC₂H₅)₃, ist.

4. Glasartiger Füllstoff nach einem oder mehreren der vorhergehenden Ansprüche, bei welchem die Körnchen (2) eine maximale mittlere Größe von zwanzig bis sechzig Mikrometern besitzen und mindestens zwei der Fragmente (3) umfassen.

5. Glasartiger Füllstoff nach einem oder mehreren der vorhergehenden Ansprüche, bei welchem die Fragmente (3) im Mittel eine maximale lineare Abmessung von fünf bis fünfzehn Mikrometern besitzen.

6. Glasartiger Füllstoff nach einem oder mehreren der vorhergehenden Ansprüche, insbesondere nach Anspruch 1, bei welchem die Fragmente (3) aus Glas, insbesondere aus E-Glas, bestehen.

7. Glasartiger Füllstoff nach einem oder mehreren der vorhergehenden Ansprüche, bei welchem die Fragmente (3) aus zermahlenem Glas bestehen.

8. Glasartiger Füllstoff nach einem oder mehreren der vorhergehenden Ansprüche, bei welchem die Fragmente (3) Teile von Glasfäsern (5a) sind.

9. Glasartiger Füllstoff nach einem oder mehreren der vorhergehenden Ansprüche, bei welchem die Schlichtemenge etwa fünf bis fünfzig Promille des Gewichts des trockenen glasartigen Materials beträgt.

10. Verfahren zur Herstellung eines Füllstoffs aus glasartigem Material für Kunststoff und Harz, **dadurch gekennzeichnet, dass** es eine Mahlstufe, in welcher das glasartige Material zu Fragmenten zerkleinert wird, eine Dosierstufe, in welcher ein Gemisch gebildet wird, das die Fragmente und eine Schlichte umfasst, und eine Agglomerierstufe, in welcher das Gemisch aus Fragmenten und Schlichte derart getrocknet wird, dass sich kompakte Körnchen bilden, die jeweils eine Vielzahl der Fragmente und Teile der getrockneten Schlichte einschließen, umfasst.

11. Verfahren nach Anspruch 10, bei welchem der Mahlstufe eine Auswahlstufe vorangeht, in welcher aus Produktionsausschuss und -abfällen stammende Glasfäden fur die Mahlstufe ausgewählt werden.

12. Verfahren nach einem oder beiden der Ansprüche 10 und 11, bei welchem die Mahlstufe verlängert wird, bis Fragmente erhalten werden, die im Mittel eine maximale lineare Abmessung von fünf bis fünfzehn Mikrometern besitzen.

13. Verfahren nach einem oder mehreren der Ansprüche 10 bis 12, bei welchem in der Mahlstufe Wasser und ein Verflüssigungsmittel und/oder ein mineralisches Bindemittel wie Bentonit zu dem glasartigem Material gegeben werden.

14. Verfahren nach einem oder mehreren der Ansprüche 10 bis 13, bei welchem in der Dosierstufe die Fragmente mit einer Schlichte vermischt werden, die aus Alkylkieselsäureestern, insbesondere Aminosilanen, ausgewählt ist.

15. Verfahren nach einem oder mehreren der Ansprüche 10 bis 14, bei welchem die Schlichte in der Dosierstufe mit einer Menge von fünf bis fünfzig Promille des Gewichts des trockenen glasartigen Materials zugegeben wird.

16. Verfahren nach einem oder mehreren der Ansprüche 10 bis 15, bei welchem in der Agglomerierstufe das Fragmente-Schlichte Gemisch auf eine Trocknungstemperatur von einhundertfünfundzwanzig bis einhundertfünfundvierzig Grad Celsius erhitzt wird.

17. Verfahren nach einem oder mehreren der Ansprüche 10 bis 16, bei welchem die Agglomerierstufe in einem beheizten Behälter durchgeführt wird, wobei das Fragmente-Schlichte Gemisch mittels Druckluft derart in den Behälter gespritzt wird, dass sich Kömchen mit einer im Mittel maximalen Größe von zwanzig bis sechzig Mikrometern bilden.

## Claims

1. Filler (1) of the glassy type for plastics materials and resins, of the type comprising granules (2) of glassy material which are provided with a sizing agent, **characterised in that** each of these granules comprises a multiplicity of fragments (3) of glassy material which are bound together by the sizing agent (4).

2. Filler of the glassy type according to claim 1, wherein the sizing agent comprises a compound chosen from esters of alkylsilicic acids.

3. Filler of the glassy type according to either or both of the preceding claims, wherein the sizing agent is an aminosilane, in particular of the formula NH₂(CH₂)₃Si(OC₂H₅)₃.

4. Filler of the glassy type according to any one or more of the preceding claims, wherein the granules (2) have a maximum mean size of between twenty and sixty micrometres and comprise at least two of the fragments (3).

5. Filler of the glassy type according to any one or more of the preceding claims, wherein the fragments (3) have, on average, a maximum linear dimension of between five and fifteen micrometres.

6. Filler of the glassy type according to any one or more of the preceding claims, in particular claim 1, wherein the fragments (3) are of glass, in particular "E" type glass.

7. Filler of the glassy type according to any one or more of the preceding claims, wherein the fragments (3) are of ground glass.

8. Filler of the glassy type according to any one or more of the preceding claims, wherein the fragments (3) are portions of glass threads (5a).

9. Filler of the glassy type according to any one or more of the preceding claims, wherein the quantity of the sizing agent is substantially between five and fifty per thousand of the weight of dry glassy material.

10. Process for producing a filler of the glassy type for plastics materials and resins, **characterised in that** it comprises: a grinding phase in which the glassy. material is reduced to fragments; a metering phase in which there is formed a mixture comprising the fragments and a sizing agent; and a binding phase in which the mixture of fragments and sizing agent is dried in order to form compact granules, each comprising a multiplicity of those fragments and portions of the dried sizing agent.

11. Process according to claim 10, wherein the grinding phase is preceded by a selection phase where glass threads originating from production waste and rejects are selected for that grinding phase.

12. Process according to either or both of claims 10 and 11, wherein the grinding phase is extended until fragments are obtained having, on average, a maximum linear dimension of between five and fifteen micrometres.

13. Process according to any one or more of claims 10 to 12, wherein, during the grinding phase, the glassy material is diluted with water and a thinning agent and/or a mineral binding agent, such as bentonite.

14. Process according to any one or more of claims 10 to 13, wherein, during the metering phase, the fragments are mixed with a sizing agent selected from esters of alkylsilicic acid, in particular an aminosilane.

15. Process according to any one or more of claims 10 to 14, wherein, during the metering phase, the sizing agent is metered at a quantity of between five and fifty per thousand of the weight of dry glassy material.

16. Process according to any one or more of claims 10 to 15, wherein, during the binding phase, the mixture of fragments and sizing agent is brought to a drying temperature of between one hundred and twenty-five and one hundred and forty-five degrees Celsius.

17. Process according to any one or more of claims 10 to 16, wherein the binding phase is carried out in a heated chamber and wherein the mixture of fragments and sizing agent is injected into the chamber by means of compressed air in order to form granules having, on average, a maximum size of between twenty and sixty micrometres.
